# EUROPÄISCHE PATENTSCHRIFT

(11) **EP 0 829 406 B1**
(45) Veröffentlichungstag und Bekanntmachung des Hinweises auf die Patenterteilung: **19.06.2002**
(21) Anmeldenummer: 97111014.3
(22) Anmeldetag: 02.07.1997
(51) Int. Cl.: B60T 13/68

(54) **Zweileitungs-Anhängerbremsanlage**
Two-pipe trailer brake installation
Installation de frein à deux conduites pour remorque

(30) Priorität: 14.09.1996 DE 19637484
(43) Veröffentlichungstag der Anmeldung: 18.03.1998
(73) Patentinhaber: WABCO GmbH & Co. OHG, 30453 Hannover (DE)
(72) Erfinder: Stender, Axel, 31787 Hameln (DE); Wiehen, Christian, Dr., 30938 Burgwedel (DE); Witte, Norbert, 31515 Wunstorf (DE); Klein, Bodo, 30890 Barsinghausen (DE); Lichtenberg, Wolfgang, 30457 Hannover (DE); Neuhaus, Detlev, 30519 Hannover (DE); Schult, Manfred, Dr., 30826 Garbsen (DE)
(74) Vertreter: Schrödter, Manfred, Dipl.-Ing.

(56) Entgegenhaltungen:
- EP-A- 0 478 952
- EP-A- 0 586 203
- DE-A- 3 207 793
- DE-A- 4 129 203
- DE-A- 4 425 789

## Beschreibung

Die Erfindung betrifft eine Zweileitungs-Anhängerbremsanlage nach dem Oberbegriff des Patentanspruchs 1.

Der Begriff "Zweileitungs-Anhängerbremsanlage" ist auf dem Gebiet der Straßenfahrzeuge, insbesondere der Nutzfahrzeuge mit Druckluftbremsen, ein stehender Begriff. Dem Fachmann ist geläufig, daß eine solche Anhängerbremsanlage als Grundumfang wenigstens eine Bremse, wenigstens einen Druckspeicher, eine Vorratsleitung, eine pneumatische Bremsleitung, eine Sicherungseinrichtung, ein Betätigungsventil und eine Notbremseinrichtung umfaßt. Der Begriff "Bremse" ist dabei ein Sammelbegriff, der außer den in Bremseingriff tretenden Bauteilen, wie Bremstrommel und Bremsbacke, auch eine Zuspanneinrichtung, wie einen Bremszylinder, und Übertragungsteile, wie Bremsgestänge, Bremswelle, Bremsnocken, beinhaltet. Die Vorratsleitung und die pneumatische Bremsleitung sind mit dem Zugfahrzeug verbindbar.

Im Betriebszustand wird über die mit dem Zugfahrzeug verbundene Vorratsleitung der Druckspeicher von dem Zugfahrzeug mit Druckluft gespeist. Die Sicherungseinrichtung verhindert eine Entleerung des Druckspeichers, wenn die Vorratsleitung von dem Zugfahrzeug abgekoppelt oder gestört, d. h. abgerissen oder defekt, ist. Das Betätigungsventil ist mit der pneumatischen Bremsleitung, dem Druckspeicher und der Bremse verbunden. Bei mit dem Zugfahrzeug verbundener pneumatischer Bremsleitung gibt das Zugfahrzeug bei einer Bremsbetätigung über die pneumatische Bremsleitung einen Bremssteuerdruck an das Betätigungsventil ab. Dieses verbindet daraufhin den Druckspeicher mit der Bremse, bis sich in letzterer ein dem Bremssteuerdruck entsprechender Bremsdruck aufgebaut hat. Die Notbremseinrichtung überwacht den Vorratsleitungsdruck. Bei einem das Abkoppeln oder eine Störung der Vorratsleitung kennzeichnenden Abfall dieses Drucks verbindet die Notbremseinrichtung den Druckspeicher mit der Bremse und löst dadurch eine automatische Bremsung aus.

Eine Zweileitungs-Anhängerbremsanlage der eingangs genannten Art ist aus der DE 32 07 793 A1 bekannt. Diese ist gegenüber der vorstehend beschriebenen herkömmlichen Anhängerbremsanlage um eine elektrische Betätigungseinrichtung erweitert, welche eine Reihe von Vorteilen, z. B. ein schnelleres Ansprechen der Anhängerbremsanlage und in einem Anhänger mit mehreren Bremsen und Achsen eine wenig aufwendige Möglichkeit zur lastabhängigen Bremsdruckverteilung, bietet. Die elektrische Betätigungseinrichtung besteht aus einem Drucksensor, einer elektrischen Steuereinrichtung, einer elektrischen Versorgung, einem Druckmodulator und einer Umschaltventileinrichtung. Der Drucksensor ist an der pneumatischen Steuerleitung angeordnet, mißt den in dieser herrschenden Bremssteuerdruck und gibt ein entsprechendes Drucksignal an die elektrische Steuereinrichtung ab. Die elektrische Steuereinrichtung, welche an der elektrischen Versorgung liegt, steuert das Öffnen und Schließen des Druckmodulators und damit die Verbindung zwischen dem Druckspeicher und der Bremse nach Maßgabe des Drucksignals.

Im Normalfall wird die bekannte Anhängerbremsanlage über die elektrische Betätigungseinrichtung betätigt und gesteuert. Nur bei einer Störung der elektrischen Betätigungseinrichtung wird diese Anhängerbremsanlage wie die oben beschriebene herkömmliche Anhängerbremsanlage betätigt. Den Vorrang der elektrischen Betätigungseinrichtung bewirkt die Umschaltventileinrichtung. Diese ist bei der bekannten Anhängerbremsanlage als übliches Zweiwegeventil ausgebildet, welches den jeweils höheren anstehenden Druck durchläßt.

Im Falle einer Störung der Vorratsleitung erfolgt die Betätigung der bekannten Anhängerbremsanlage und damit die automatische Bremsung mittels der in das Anhängerbremsventil integrierten Notbremseinrichtung ohne Mitwirkung der elektrischen Betätigungseinrichtung und damit langsam.

Der Erfindung liegt die Aufgabe zugrunde, eine Zweileitungs-Anhängerbremsanlage der eingangs genannten Art mit einfachen Mitteln so fortzubilden, daß sie auch bei einer Störung der Vorratsleitung die elektrische Betätigungseinrichtung einsetzen kann.

Diese Aufgabe wird durch die in dem Patentanspruch 1 angegebene Erfindung gelöst. Fortbildungen und vorteilhafte Ausgestaltungen sind in den Unteransprüchen angegeben.

Bei der bekannten Anhängerbremsanlage fällt bei einer Störung der Vorratsleitung, ggfs, die wenig aufwendige lastabhängige Bremsdruckverteilung aus. Die Erfindung hingegen bewahrt diese Funktion bei einer solchen Störung.

Weitere Vorteile der Erfindung sowie ihrer Fortbildungen und Ausgestaltungen werden in deren nunmehr folgender Erläuterung anhand zeichnerisch dargestellter Ausführungsbeispiele angegeben.

Unter durchgehender Verwendung gleicher Bezugszeichen für Komponenten mit gleichen Funktionen sowie mit durchgehenden Linien für Druckleitungen und strichpunktierten Linien für elektrische Leitungen zeigen
- Fig. 1: schematisch eine Grundausführung der erfindungsgemäßen Zweileitungs-Anhängerbremsanlage,
- Fig. 2: die Anlage gemäß Fig. 1 mit Fortbildungen.

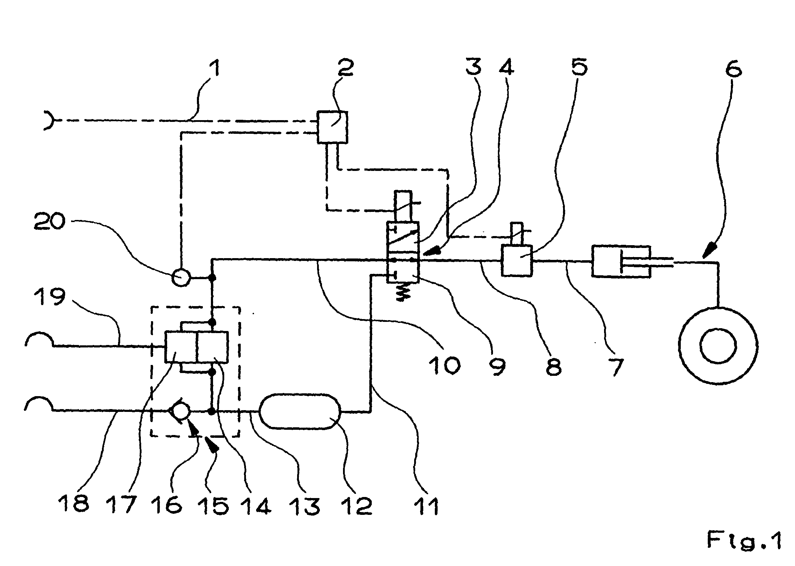

Die in Fig. 1 dargestellte Zweileitungs-Anhängerbremsanlage besteht aus einer herkömmlichen Zweileitungs-Anhängerbremsanlage und einer Erweiterung derselben um eine elektrische Betätigungseinrichtung.

Zu der herkömmlichen Zweileitungs-Anhängerbremsanlage gehören eine Bremse (6), eine Vorratsleitung (18), eine Sicherungseinrichtung (16), ein Druckspeicher (12), eine pneumatische Bremsleitung (19), ein Betätigungsventil (17), eine Notbremseinrichtung (14) und weitere Druckleitungen.

Die elektrische Betätigungseinrichtung besteht aus einer elektrischen Versorgung, einer elektrischen Steuereinrichtung (2), einem elektrischen Drucksensor (20), einer elektrisch betätigbaren Umschaltventileinrichtung (4), einem elektrisch betätigbaren Druckmodulator (5) sowie den zugehörigen elektrischen Leitungen und Druckleitungen.

Das Wort "Bremse" ist als Sammelbegriff entsprechend der in der Beschreibungseinleitung gegebenen Definition zu verstehen. Die Bremse (6) kann die einzige Bremse der Bremsanlage sein, sie kann aber auch für mehrere Bremsen stehen. In diesem Fall gilt das nachstehend für die Bremse (6) Ausgeführte für die anderen Bremsen mit bzw. in entsprechender Weise mit.

Die Vorratsleitung (18) ist über die Sicherungseinrichtung (16) mit dem Druckspeicher (12) verbunden. Die in gebräuchlicher Weise als Rückschlagventil ausgebildete und dargestellte Sicherungseinrichtung (16) läßt eine Strömung aus der Vorratsleitung (18) in den Druckspeicher (12) zu, verhindert aber eine Strömung in entgegengesetzter Richtung.

Von dem Druckspeicher (12) gehen zwei zueinander parallele Leitungszweige (10, 13 und 11) einer Verbindungsleitung (7, 8, 10, 11, 13) zwischen dem Druckspeicher (12) und der Bremse (6) aus. Diese Leitungszweige (10, 13 und 11) münden in verschiedene Eingänge der Umschaltventileinrichtung (4), von deren einem Ausgang weitere Teile der Verbindungsleitung (7, 8, 10, 11, 13) als Einzelstrang (7, 8) zu der Bremse (6), genauer zu deren Zuspanneinrichtung, abgehen.

Die Notbremseinrichtung (14) ist als auf Druckabfall ansprechendes Relaisventil ausgebildet und entspricht damit einer häufig eingesetzten Bauart. Sie ist vorratsseitig über einen Teil (13) des einen Leitungszweiges (10, 13) der Verbindungsleitung (7, 8, 10, 11, 13) mit dem Druckspeicher (12) und ausgangsseitig über einen zweiten Teil (10) dieses Leitungszweiges (10, 13) mit dem ersten Eingang der Umschaltventileinrichtung (4) verbunden. Steuerseitig ist die Notbremseinrichtung (14) mit der Vorratsleitung verbunden.

Das Betätigungsventil (17) ist als Relaisventil ausgebildet und entspricht damit ebenfalls einer gebräuchlichen Bauart. Das Betätigungsventil (17) steht vorratsseitig bzw. ausgangsseitig mit den Teilen des Leitungszweiges (10, 13) in Verbindung wie die Notbremseinrichtung (14). Steuerseitig ist das Betätigungsventil (17) an die pneumatische Bremsleitung (19) angeschlossen.

In der Praxis sind die Sicherheitseinrichtung (16), die Notbremseinrichtung (14) und das Betätigungsventil (17) häufig zu einer als "Anhängerbremsventil" bezeichneten Baueinheit (15) vereinigt, wie sie durch eine gestrichelte Umfassungslinie angedeutet ist.

Die elektrische Versorgung der elektrischen Betätigungseinrichtung ist als elektrische Versorgungsleitung (1) dargestellt. Diese ist im Betriebszustand mit dem Zugfahrzeug, genauer mit dessen elektrischer Anlage, verbunden, so daß also die elektrische Versorgung der elektrischen Betätigungseinrichtung vom Zugfahrzeug aus erfolgt. Die elektrische Versorgung kann aber auch durch eine eigene elektrische Anlage des Anhängers sichergestellt werden, z. B. durch eine Anhänger-Batterie. Wesentlich ist, daß die elektrische Versorgung der elektrischen Betätigungseinrichtung im Betriebszustand ständig elektrische Spannung und elektrischen Strom zur Verfügung stellt. Eine solche elektrische Versorgung ist beispielsweise bei Anhängerbremsanlagen mit Blokkierschutzeinrichtung vorhanden.

Der Druckmodulator (5) ist in dem von dem Ausgang der Umschaltventileinrichtung (4) abgehenden Einzelstrang (7, 8) der Verbindungsleitung (7, 8, 10, 11, 13) angeordnet.

Der Drucksensor (20) ist stromabwärts der Notbremseinrichtung (14) und des Betätigungsventils (17) an dem von diesen zu der Umschaltventileinrichtung (4) führenden Teil des Leitungszweiges (10, 13) angeordnet. Der Drucksensor ist so ausgebildet, daß er ein elektrisches Drucksignal abgibt, dessen Wert von dem erfaßten Druck abhängt. In nicht näher dargestellter Weise kann der Drucksensor (20) mit der Notbremseinrichtung (14) oder dem Betätigungsventil (17) oder, gegebenenfalls, dem Anhängerbremsventil (15) baulich vereinigt sein.

Die Umschaltventileinrichtung (4) ist so ausgebildet, daß sie folgende Wirkungen erbringt. Im Ruhezustand, also bei nicht erregtem elektrischem Betätigungsteil, verbindet sie den von der Notbremseinrichtung (14) kommenden Leitungszweig (10, 13) mit ihrem Ausgang, ist also für diesen Leitungszweig (10, 13) durchgängig, während sie den parallelen, direkt zu ihr gelangenden, Leitungszweig (11) sperrt. Im Arbeitszustand, also bei erregtem Betätigungsteil, sperrt die Umschaltventileinrichtung (4) hingegen den von der Notbremseinrichtung (14) kommenden Leitungszweig (10, 13) und ist für den parallelen Leitungszweig (11) durchgängig.

In der Fig. ist die Umschaltventileinrichtung (4) als gebräuchliches elektrisch betätigbares 3/2-Wegeventil dargestellt, welches im Ruhezustand in eine erste Stellung (9) gestellt wird und im Arbeitszustand eine zweite Stellung (3) annimmt.

Der Druckmodulator (5) verbindet im Ruhezustand, also bei nicht erregtem Betätigungsteil, den Teil (7) und damit die Bremse (6) mit dem von der Umschaltventileinrichtung (4) kommenden Teil (8) der Verbindungsleitung (7, 8, 10, 11, 13).

Der Druckmodulator (5) ist so ausgebildet, daß er nach Maßgabe der seinem Betätigungsteil zugeführten elektrischen Betätigungssignale diese Verbindung aufrechterhält oder unterbricht oder die Bremse (6) mit der Atmosphäre (8) verbindet und dadurch den Bremsdruck einstellt.

Solche Druckmodulatoren werden auch als Regelventile in der Blockierschutztechnik eingesetzt. Deshalb und weil sie auch über die elektrische Versorgung verfügen, bieten blockiergeschützte Anhängerbremsanlagen eine gute Ausgangsbasis für die elektrische Betätigungseinrichtung.

In der Praxis sind die Umschaltventileinrichtung und der Druckmodulator sowie der dazwischen liegende Teil (8) der Verbindungsleitung in nicht dargestellter Weise häufig zu einer Baueinheit zusammengefaßt.

Die elektrische Steuereinrichtung (2) ist eingangsseitig mit der elektrischen Versorgungsleitung (1) sowie dem Drucksensor (20) und ausgangsseitig mit dem Druckmodulator (5) sowie der Umschaltventileinrichtung (4) verbunden, und zwar mit deren elektrischen Betätigungsteilen. Diese Betätigungsteile sind in der Regel Elektromagnete.

Die elektrische Steuereinrichtung (2) ist so ausgebildet, d. h. so mit elektrischen/elektronischen Bauelementen bestückt und/oder so programmiert, daß sie bei Erhalt eines Drucksignals von dem Drucksensor (20) den Betätigungsteil der Umschaltventileinrichtung (4) erregt und den Betätigungsteil des Druckmodulators (5) so erregt, daß der Druckmodulator (5) aus dem von der Umschaltventileinrichtung (4) kommenden Teil (8) der Verbindungsleitung (7, 8, 10, 11, 13) einen Bremsdruck zu der Bremse (6) durchläßt, welcher dem Wert des Drucksignals entspricht.

Aufgrund der beschriebenen Wirkungsweisen der einzelnen Komponenten funktioniert die Anhängerbremsanlage wie folgt.

Im Betriebszustand sind die Vorratsleitung (18) und die pneumatische Bremsleitung (19) über zeichnerisch angedeutete, aber nicht näher bezeichnete, Kupplungsköpfe mit der Bremsanlage des Zugfahrzeugs und die elektrische Versorgungsleitung (1) über eine zeichnerisch angedeutete, aber nicht näher bezeichnete, elektrische Kupplung mit der elektrischen Anlage des Zugfahrzeugs verbunden.

Im Normalbetrieb wird der Druckspeicher (12) über die Vorratsleitung (18) und die Sicherungseinrichtung (16) vom Zugfahrzeug mit Druckluft gespeist.

Wird nun die Zugfahrzeugbremsanlage betätigt, so gibt sie über die pneumatische Bremsleitung (19) einen Bremssteuerdruck an das Betätigungsventil (17) ab. Dieses öffnet sich daraufhin und läßt aus dem Druckspeicher (12) in den zu der Umschaltventileinrichtung (4) gehenden Teil (10) des ihm zugeordnten Leitungszweiges (10, 13) der Verbindungsleitung (7, 8, 10, 11, 13) einen dem Bremssteuerdruck entsprechenden Druck durch. Schon bei einem sehr geringen Druck, beispielsweise 50 mbar, in diesem Teil (10) des Leitungszweiges (10, 13) beginnt der Drucksensor (20) mit der Drucksignalabgabe.

Bei Erhalt des ersten Drucksignals erregt die elektrische Steuereinrichtung (2) den Betätigungsteil der Umschaltventileinrichtung (4), woraufhin diese ihren Arbeitszustand annimmt, dadurch den von der Notbremseinrichtung (14) kommenden Leitungszweig (10, 13) der Verbindungsleitung (7, 8, 10, 11, 13) sperrt und für den direkt vom Druckspeicher (12) kommenden Leitungszweig (11) durchgängig wird. Sodann steuert die elektrische Steuereinrichtung (2) den Betätigungsteil des Druckmodulators (5) so, daß dieser aus dem von der Umschalteinrichtung (4) kommenden Teil (8) der Verbindungsleitung (7, 8, 10, 11, 13) einen Bremsdruck zu der Bremse (6) durchläßt, welcher dem Wert des von dem Drucksensor (20) abgegebenen Drucksignals und damit dem sich in dem Teil (10) des Leitungszweiges (10, 13) aufbauenden Druck und somit auch dem Bremssteuerdruck entspricht.

Bei einer Bremsbetätigung sperrt also die Steuereinrichtung (2) mittels der Umschaltventileinrichtung (4) die Zuführung von Bremsdruck zu der Bremse (6) über den durch die Notbremseinrichtung (14) bzw. das Betätigungsventil (17) geführten Leitungszweig (10, 13) ab und verschafft damit der elektrischen Betätigungseinrichtung Vorrang. Diese bewirkt ein schnelleres Ansprechen der Bremsanlage sowohl beim Bremsbeginn als auch bei Änderungen des Bremssteuerdrucks im Verlauf einer Bremsbetätigung, sowie, bei entsprechender Ausgestaltung, eine wenig aufwendige lastabhängige Bremsdruckverteilung.

Bei Beendigung der Bremsbetätigung wird die pneumatische Bremsleitung (19) druckentlastet, woraufhin das Betätigungsventil (17) den zu der Umschaltventileinrichtung (4) führenden Teil (10) des Leitungszweiges (10, 13) mit der Atmosphäre verbindet, die Steuereinrichtung (2) die Betätigungsteile der Umschaltventileinrichtung (4) und des Druckmodulators (5) entregt, der Druckmodulator (5) die Bremse (6) mit der Atmosphäre verbindet und die Umschaltventileinrichtung (4) in ihren Ruhestand zurückkehrt.

Die Speisung des Druckspeichers (12) über die Vorratsleitung (18) bleibt im Normalfall von einer Bremsbetätigung unberührt. Infolge der Wirkung der Sicherungseinrichtung (16) bleibt der Speicherdruck bei Schwankungen des Vorratsleitungsdrucks erhalten. Fällt aber der Vorratsleitungsdruck auf einen eine Störung der Vorratsleitung (18) kennzeichnenden Wert, so öffnet sich die Notbremseinrichtung (14) und läßt aus dem Druckspeicher (12) Druck in den Teil (10) des Leitungszweiges. Auf diesen Druck im Leitungsteil (10) reagiert die elektrische Betätigungseinrichtung wie vorstehend beschrieben, so daß sie auch im Falle einer Störung der Vorratsleitung (18) ein schnelles Ansprechen der Bremse und damit eine schnelle automatische Bremsung bewirkt.

Ein weiterer wesentlicher Vorteil gegenüber der bekannten Bremsanlage ist, daß bei dieser automatischen Bremsung die elektrische Betätigungseinrichtung, ggfs, die lastabhängige Bremsdruckverteilung beibehält.

Tritt eine Störung der elektrischen Versorgung auf, so bleiben die Umschaltventileinrichtung (4) und der Druckmodulator (5) stets im Ruhezustand, so daß in diesem Fall die Bremse (6) über den Leitungszweig (10, 13) und den Einzelstrang (7, 8) der Verbindungsleitung (7, 8, 10, 11, 13) wie in einer herkömmlichen Zweileitungs-Anhängerbremsanlage mit dem Druckspeicher (12) verbindbar ist. Das Zeitverhalten der Bremsanlage bei einer solchen Bremsbetätigung ist natürlich schlechter als bei einer Bremsbetätigung über die elektrische Betätigungseinrichtung.

Beim Abkoppeln der Vorratsleitung (18), welches regelmäßig mit einem Abkoppeln der Versorgungsleitung (1) bzw. einer Unterbrechung der elektrischen Versorgung einhergeht, wird die Bremse (6) ebenfalls wie in einer herkömmlichen Anhängerbremsanlage mit dem Druckspeicher (12) verbunden.

Nun ist es denkbar, daß die elektrische Versorgung ungestört, die elektrische Steuereinrichtung (2) aber gestört ist. Wirkt sich diese Störung nur auf die Umschaltventileinrichtung (4) aus, verbleibt diese in ihrem für den Leitungszweig (10, 13) durchgängigen Ruhezustand. Der Druckmodulator (5) arbeitet dann normal weiter. Die etwa vorhandene lastabhängige Bremsdruckverteilung durch die elektrische Betätigungseinrichtung bleibt erhalten. Wirkt sich die Störung der elektrischen Steuereinrichtung (2) nur auf den Druckmodulator (5) aus, so setzt die Steuereinrichtung (2) auch die Erregung der Umschaltventileinrichtung (4) still, und die Bremsanlage wird wie bei einer Störung der elektrischen Versorung betätigt. Dies gilt auch, wenn sich die Störung der elektrischen Steuereinrichtung (2) sowohl auf die Umschaltventileinrichtung (4) als auch auf den Druckmodulator (5) auswirkt.

Auf jeden Fall werden die vorstehend erwähnten Störungen dem Fahrer im Zugfahrzeug durch eine oder mehrere Warneinrichtungen, beispielsweise in Form von Warnleuchten, angezeigt.

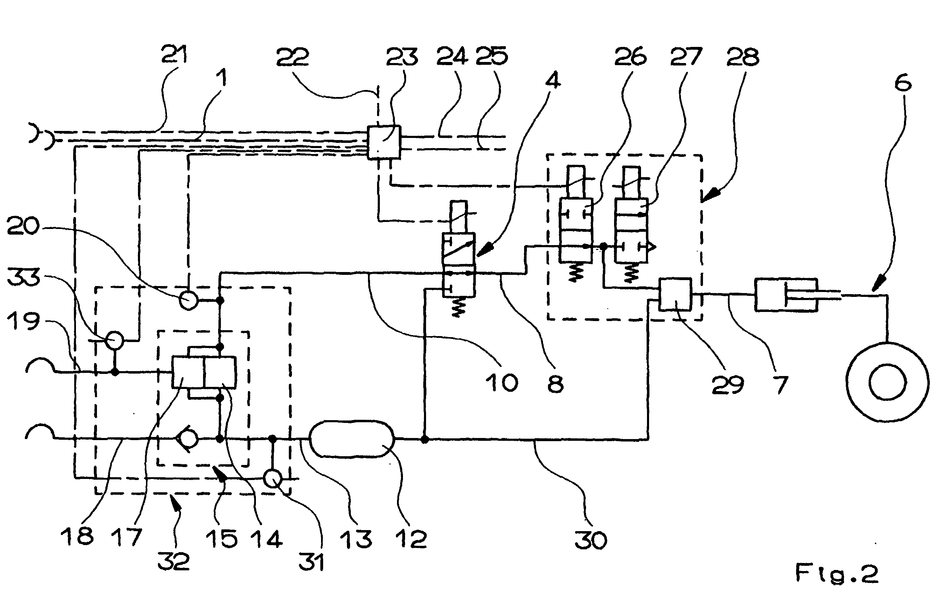

In Fig. 2 ist die bisher beschriebene Zweileitungs-Anhängerbremsanlage auf verschiedene Arten fortgebildet.

Eine Fortbildung besteht aus einer elektrischen Bremsleitung (21) und einem entsprechenden Ausbau der hier mit (23) bezeichneten elektrischen Steuereinrichtung.

Die elektrische Steuereinrichtung (23) ist bei dieser Fortbildung eingangsseitig auch mit der elektrischen Bremsleitung (21) verbunden und so ausgebildet, daß sie auf den Erhalt eines elektrischen Betätigungssignals über die elektrische Bremsleitung (21) wie auf den Erhalt eines Drucksignals von dem Drucksensor (20) reagiert. Besitzt das Zugfahrzeug eine elektrisch betätigte Bremsanlage, so ist im Betriebszustand, zusätzlich zu den bereits genannten Verbindungen, die elektrische Bremsleitung (21) über eine zeichnerisch angedeutete, aber nicht näher bezeichnete, elektrische Kupplung mit der elektrischen Betätigungseinrichtung des Zugfahrzeugs verbunden. Bei einer Bremsbetätigung im Zugfahrzeug gibt dessen elektrische Betätigungseinrichtung über die elektrische Bremsleitung (21) ein elektrisches Betätigungssignal an die Steuereinrichtung (23) ab, dessen Wert von der vom Fahrer geforderten Bremswirkung abhängt.

Da das elektrische Betätigungssignal über die elektrische Bremsleitung (21) die elektrische Steuereinrichtung (23) schneller erreicht als der Drucksensor (20) ein Drucksignal abgibt, spricht die Bremsanlage bei dieser Fortbildung noch schneller an. Die schnellere Zuführung des elektrischen Betätigungssignals bewirkt auch, daß die Anhängerbremsanlage vorrangig über dieses Signal betätigt wird.

Bei Ausfall des elektrischen Betätigungssignals über die elektrische Bremsleitung (21) und wenn das Zugfahrzeug keine elektrische Betätigungseinrichtung besitzt, wird die Anhängerbremsanlage über das Drucksignal des Drucksensors (20) wie vorstehend beschrieben betätigt. Wie vorstehend beschrieben verhält sich die Anhängerbremsanlage auch bei einer Störung der Vorratsleitung oder bei den erwähnten Störungen der elektrischen Betätigungseinrichtung.

Wegen ihrer unterschiedlichen Funktionen sind die Versorgungsleitung (1) und die elektrische Bremsleitung (21) getrennt dargestellt. In der Praxis werden sie aber normalerweise in einem Kabel zusammengefaßt.

Aus den vorstehenden Ausführungen zu beiden Fig. geht hervor, daß das Auftreten einer Störung der Vorratsleitung (18) eine sofortige automatische Bremsung auslöst. Eine solche Bremsung kann zu einem unpassenden Zeitpunkt und/oder in einer unpassenden Straßen- bzw. Verkehrslage erfolgen und dadurch eine Gefahrensituation für den betreffenden Fahrzeugzug, aber auch für andere Verkehrsteilnehmer, hervorrufen. Dabei ist im allgemeinen beim Auftreten einer Störung der Vorratsleitung (18) die Funktionsfähigkeit der Anhängerbremsanlage noch gar nicht akut beeinträchtigt, weil ja der Druckspeicher (12) noch einen hohen Speicherdruck oder gar den vollen Nenn-Speicherdruck führt.

Der Vermeidung einer Gefahrensituation durch eine automatische Bremsung dient eine weitere Fortbildung. Dieser liegt der Gedanke zugrunde, die automatische Bremsung hinauszuschieben, bis der Speicherdruck auf den Wert eines vorbestimmten Sicherheitsdrucks abgefallen ist, der noch eine weitgehende Funktionssicherheit der Anhängerbremsanlage gewährleistet.

Bei dieser Fortbildung ist der bereits abgehandelte Drucksensor (20) zwischen der Notbremseinrichtung (14) und der Umschaltventileinrichtung (4) als erster Drucksensor zu bezeichnen.

Die Fortbildung besteht aus einem zweiten Drucksensor (33) und einem dritten Drucksensor (31) und einem Ausbau der elektrischen Steuereinrichtung (23). Der zweite Drucksensor (33) überwacht den Bremssteuerdruck in der pneumatischen Bremsleitung (19), während der dritte Drucksensor (31) den Speicherdruck des Druckspeichers (12) überwacht.

Die Steuereinrichtung (23) ist bei dieser Fortbildung eingangsseitig auch mit dem zweiten und dem dritten Drucksensor (33 bzw. 31) verbunden und weist auch einen durch eine elektrische Ausgangsleitung angedeuteten Ausgang (22) für eine Warneinrichtung auf.

Die nicht dargestellte Warneinrichtung ist im Fahrerhaus des Zugfahrzeugs angeordnet und in geeigneter Weise mit dem Ausgang (22) der elektrischen Steuereinrichtung (23) verbunden.

Die elektrische Steuereinrichtung (23) ist bei dieser Fortbildung zusätzlich so ausgebildet, daß sie wie nachstehend näher beschrieben funktioniert. Beim Auftreten eines Drucksignals von dem ersten Drucksensor (20) prüft die elektrische Steuereinrichtung (23), ob sie auch ein Betätigungssignal über die elektrische Bremsleitung (21) und ein Drucksignal von dem zweiten Drucksensor (33) erhält. Ist dies der Fall, erregt die elektrische Steuereinrichtung (23) die Betätigungsteile der Umschaltventileinrichtung (4) und des hier mit (28) bezeichneten Druckmodulators wie oben beschrieben. Stellt die elektrische Steuereinrichtung (23) bei Erhalt eines Drucksignals von dem Drucksensor (20) aber das Fehlen des Betätigungssignals über die elektrische Bremsleitung (21) und des Drucksignals des zweiten Drucksensors (33) fest, erfolgte der Druckaufbau an dem ersten Drucksensor (20) durch Ansprechen der Notbremseinrichtung (14). Es muß also eine Störung der Vorratsleitung (18) vorliegen. In diesem Fall gibt die elektrische Steuereinrichtung (23) an dem Ausgang (22) das Warnsignal ab und steuert gleichzeitig den Druckmodulator (28) in eine eine Druckzufuhr zu der Bremse (6) sperrende Stellung.

Der Fahrer wird nun über die Warneinrichtung auf das Vorliegen der Störung der Vorratsleitung hingewiesen und kann in dem Umfang, der durch die Differenz zwischen dem gerade vorhandenen Speicherdruck und dem Sicherheitsdruck bestimmt ist, den Fahrzeugzug bremsen und den Zeitpunkt bzw. den Ort für die Stillsetzung des Fahrzeugzuges bestimmen. Eine automatische Bremsung in dieser Phase verhindert der Druckmodulator (28) durch seine erwähnte Sperrstellung.

Erst wenn der dritte Drucksensor (31) ein den Abfall des Speicherdrucks auf den Sicherheitsdruck kennzeichnendes Drucksignal abgibt, steuert die elektrische Steuereinrichtung (23) Druckmodulator (28) durch Erregung seines Betätigungsteiles so, daß dieser die Druckzufuhr zu der Bremse (6) öffnende Stellung geht, und löst dadurch die automatische Bremsung aus.

Aus dem vorstehenden geht hervor, daß es darauf ankommt, daß der zweite Drucksensor (33) bei einem geringen Druck ein Drucksignal abgibt, welches einen unveränderlichen Wert haben kann, und daß der dritte Drucksensor (31) ein gleichartiges Signal bei dem festen Wert "Sicherheitsdruck" abgibt. Das bedeutet, daß diese Drucksensoren keine kontinuierlichen druckabhängigen Signale abgeben müssen, sondern als einfache Druckschalter ausgebildet sein können. Solche Druckschalter soll der Begriff "Drucksensor" in diesem Zusammenhang ausdrücklich umfassen.

Durch eine gestrichelt dargestellte Umfassungslinie (32) ist angedeutet, daß eine bauliche Vereinigung einzelner oder aller der genannten Drucksensoren mit dem Betätigungsventil (17), und/oder der Notbremseinrichtung (14) oder dem Anhängerbremsventil (15) möglich ist.

Es sei noch erwähnt, daß die Drucksensoren auch zur gegenseitigen Überprüfung und zum Abgleich der Steuerelektronik herangezogen werden können.

Fig. 2 zeigt ferner eine Fortbildung des Druckmodulators.

In Fig. 1 ist der Druckmodulator (5) ohne nähere Einzelheiten als durchsteuernde Ausführung dargestellt. Bei dieser Ausführung müssen der Druckmodulator (5) und die Umschaltventileinrichtung (4) das gesamte, von der Bremse (6) aufgenommene, Druckluftvolumen durchlassen. Das setzt entsprechend stark bemessene elektrische Betätigungsteile mit entsprechend hohem Strom bzw. Spannungsbedarf voraus.

In Fig. 2 hingegen ist der Druckmodulator (28) als elektrisch gesteuertes Relaisventil dargestellt. Das bedeutet, daß er ein Relaisventil (29) enthält, welches vorratsseitig über eine Vorratsleitung (30) direkt mit dem Druckspeicher (12) und ausgangsseitig mit der Bremse (6) verbunden ist, während seine Steuerleitung an den von der Umschaltventileinrichtung (4) kommenden Leitungsteil (8) angeschlossen ist. Dabei wird die Steuerleitung durch eine elektrisch betätigte Ventileinrichtung (26, 27) beherrscht. Ein derart aufgebauter Druckmodulator ist beispielsweise in der DE 37 30 779 A1 näher beschrieben. Ein solcher Druckmodulator bietet den Vorteil, daß die Umschaltventileinrichtung (4) und die Ventileinrichtung (26, 27) nur durch die Steuerluft des Relaisventils (29) durchströmt werden und ihre elektrischen Betätigungsteile entsprechend schwach mit einem entsprechend geringen Strom bzw. Spannungsbedarf ausgelegt sein können.

Der Druckmodulator (28) ist als teilweise in dem stromabwärts der Umschaltventileinrichtung (4) gelegenen Teil der hier mit (7, 8, 10, 11, 13, 30) zu bezeichnenden Verbindungsleitung angeordnet anzusehen, während der Druckmodulator (5) der Fig. 1 voll in diesem Teil angeordnet ist.

Schließlich ist in Fig. 2 beispielhaft durch zwei elektrische Leitungen (24, 25), die mit weiteren Eingängen der elektrischen Steuereinrichtung (23) verbunden sind, angedeutet, daß die elektrische Steuereinrichtung (23) bei der Steuerung der Umschaltventileinrichtung (4) und/oder des Druckmodulators (28) weitere elektrische Signale verarbeiten kann. Beispielhaft seien an dieser Stelle Raddrehzahlsignale für den Blokkierschutz, Lastsignale für die lastabhängige Bremsdruckverteilung, Verzögerungssignale und Koppelkraftsignale aus der Kupplung zwischen Zugfahrzeug und Anhänger genannt.

Soweit sich aus vorstehendem nichts anderes ergibt, sollen die zu einer Fig. gemachten Ausführungen für die andere Fig. direkt oder in entsprechender Weise mitgelten.

Der Fachmann erkennt, daß das Ausführungsbeispiel und seine Fortbildungen den Schutzbereich der Erfindung nicht erschöpfend beschreiben, sondern daß dieser Schutzbereich alle Ausgestaltungen erfaßt, die sich den Patentansprüchen unterordnen.

## Patentansprüche

1. Zweileitungs-Anhängerbremsanlage mit
a) einer elektrischen Versorgung (1),
b) einer, stromaufwärts einer Umschaltventileinrichtung (4) in zwei parallele Leitungszweige (10, 13; 11) aufgeteilten, Verbindungsleitung (7, 8, 10, 11, 13, 30) zwischen dem Druckspeicher (12) und der wenigstens einen Bremse (6),
c) einer eingangsseitig mit der elektrischen Versorgung (1) sowie einem elektrischen Drucksensor (20) und ausgangsseitig mit einem den Bremsdruck in der Bremse (6) einstellenden, elektrisch betätigbaren, Druckmodulator (5; 28) verbundenen und die Betätigung des Druckmodulators (5; 28) steuernden elektrischen Steuereinrichtung (2; 23), wobei
d) wenigstens die Notbremseinrichtung (14) in dem einen Leitungszweig (10, 13) der Verbindungsleitung (7, 8, 10, 11, 13, 30) zwischen dem Druckspeicher (12) und der Umschaltventileinrichtung (4) angeordnet ist,
e) die Umschaltventileinrichtung (4) die Leitungszweige (10, 13; 11) der Verbindungsleitung (7, 8, 10, 11, 13, 30) alternativ sperrt und öffnet,
**dadurch gekennzeichnet, daß**
f) die Umschaltventileinrichtung (4) elektrisch betätigbar ist,
g) der Druckmodulator (5 ; 28) wenigstens teilweise in dem stromabwärts der Umschaltventileinrichtung (4) gelegenen Teil (7, 8; 30, 8) der Verbindungsleitung (7, 8, 10, 11, 13, 30) angeordnet ist,
h) der Drucksensor (20) an dem der Notbremseinrichtung (14) zugeordneten Leitungszweig (10, 13) der Verbindungsleitung (7, 8, 10, 11, 13, 30) stromabwärts der Notbremseinrichtung (14) angeordnet ist,
i) die elektrische Steuereinrichtung (2; 23) ausgangsseitig auch mit der Umschaltventileinrichtung (4) verbunden und so ausgebildet ist, daß sie bei Erhalt eines Drucksignals von dem Drucksensor (20) die Umschaltventileinrichtung (4) in eine den der Notbremseinrichtung (14) zugeordneten Leitungszweig (10, 13) der Verbindungsleitung (7, 8, 10, 11, 13, 30) sperrende Stellung steuert.

2. Anhängerbremsanlage nach Anspruch 1,
**dadurch gekennzeichnet, daß**
die elektrische Steuereinrichtung (23) eingangsseitig auch mit einer mit dem Zugfahrzeug verbindbaren elektrischen Bremsleitung (21) verbunden und derart ausgebildet ist, daß sie auch bei Erhalt eines Betätigungssignals über die elektrische Bremsleitung (21) die Umschaltventileinrichtung (4) in die den der Notbremseinrichtung (14) zugeordneten Leitungszweig (10, 13) der Verbindungsleitung (7, 8, 10, 11, 13, 30) sperrende Stellung steuert.

3. Anhängerbremsanlage nach Anspruch 2, wobei der Drucksensor (20) gemäß Anspruch 1 ein erster Drucksensor ist,
**dadurch gekennzeichnet, daß**
die elektrische Steuereinrichtung (23) eingangsseitig auch mit einem den Bremssteuerdruck in der pneumatischen Bremsleitung (19) überwachenden zweiten Drucksensor (33) und einem den Speicherdruck überwachenden dritten Drucksensor (31) und ausgangsseitig auch mit einer Warneinrichtung verbunden und so ausgebildet ist, daß sie
a) bei Erhalt eines Drucksignals des ersten Drucksensors (20) ohne Erhalt eines Drucksignals des zweiten Drucksensors (33) und ohne Erhalt eines Betätigungssignals über die elektrische Bremsleitung (21) unter gleichzeitiger Aktivierung der Warneinrichtung den Druckmodulator (28) in eine die Druckzufuhr zu der Bremse (6) sperrende Stellung steuert und
b) bei zusätzlichem Erhalt eines einen vorbestimmten Sicherheitsdruck kennzeichnenden Drucksignals von dem dritten Drucksensor (31) den Druckmodulator (28) in eine die Druckzufuhr zu der Bremse (6) öffnende Stellung steuert.

## Claims

1. Dual-line trailer brake system having
a) an electrical supply (1),
b) a connecting line (7, 8, 10, 11, 13, 30) between the pressure accumulator (12) and the at least one brake (6), which connecting line is divided upstream of a switch-over valve device (4) into two parallel line branches (10, 13; 11);
c) an electrical control device (2; 23) connected on the input side to the electrical supply (1) and to an electrical pressure sensor (20) and on the output side to an electrically actuatable pressure modulator (5; 28) that adjusts the brake pressure in the brake (6), which electrical control device (2, 23) controls the actuation of the pressure modulator (5; 28),
with
d) at least the emergency braking device (14) being arranged in one line branch (10, 13) of the connecting line (7, 8, 10, 11, 13, 30), between the pressure accumulator (12) and the switch-over valve device (4),
e) the switch-over valve device (4) alternatively blocking and opening the line branches (10, 13; 11) of the connecting line (7, 8, 10, 11, 13, 30),
**characterised in that**
f) the switch-over valve device (4) is electrically actuatable,
g) the pressure modulator (5; 28) is arranged at least partly **in that** portion (7, 8; 30, 8) of the connecting line (7, 8, 10, 11, 13, 30) which is located downstream of the switch-over valve device (4),
h) the pressure sensor (20) is arranged at that line branch (10, 13) of the connecting line (7, 8, 10, 11, 13, 30) which is associated with the emergency braking device (14), downstream of the emergency braking device (14),
i) the electrical control device (2; 23) is also connected on the output side to the switch-over valve device (4) and is so constructed that, on receiving a pressure signal from the pressure sensor (20), it controls the switch-over valve device (4) so that the latter adopts a position blocking that line branch (10, 13) of the connecting line (7, 8, 10, 11, 13, 30) which is associated with the emergency braking device (14).

2. Trailer brake system according to claim 1,
**characterised in that**
the electrical control device (23) is, on the input side, also connected to an electrical brake line (21) arranged to be connected to the towing vehicle and is so constructed that, on receiving an actuating signal by way of the electrical brake line (21), it also controls the switch-over valve device (4) so that the latter adopts the position blocking that line branch (10, 13) of the connecting line (7, 8, 10, 11, 13, 30) which is associated with the emergency braking device (14).

3. Trailer brake system according to claim 2, wherein the pressure sensor (20) according to claim 1 is a first pressure sensor,
**characterised in that**
the electrical control device (23) is, on the input side, also connected to a second pressure sensor (33) monitoring the brake control pressure in the pneumatic brake line (19) and to a third pressure sensor (31) monitoring the accumulator pressure and, on the output side, is also connected to a warning device, and is so constructed that,
a) on receiving a pressure signal from the first pressure sensor (20) without receiving a pressure signal from the second pressure sensor (33) and without receiving an actuating signal by way of the electrical brake line (21) and with, at the same time, activation of the warning device, it controls the pressure modulator (28) so that the latter adopts a position blocking the pressure supply to the brake (6), and
b) on additionally receiving from the third pressure sensor (31) a pressure signal indicating a predetermined safety pressure, it controls the pressure modulator (28) so that the latter adopts a position opening the pressure supply to the brake (6).

## Revendications

1. Installation de freinage à deux conduites pour remorque, comportant
a) une alimentation électrique (1),
b) une conduite de liaison (7, 8, 10, 11, 13, 30), subdivisée en amont d'un dispositif à valve de commutation (4) en deux branches de conduite parallèles (10, 13 ; 11), entre l'accumulateur de pression (12) et au moins un frein (6),
c) un dispositif de commande électrique (2 ; 23) qui est relié du côté entrée à l'alimentation électrique (1) ainsi qu'à un capteur de pression électrique (20) et du côté sortie à un modulateur de pression (5 ; 28) susceptible d'être actionné par voie électrique et réglant la pression de freinage dans le frein (6), et qui commande l'actionnement du modulateur de pression (5 ; 28),
dans laquelle
d) au moins le dispositif de freinage de secours (14) est agencé dans la branche de conduite (10, 13) de la conduite de liaison (7, 8, 10, 11, 13, 30) entre l'accumulateur de pression (12) et le dispositif à valve de commutation (4),
e) le dispositif à valve de commutation (4) obture et ouvre en alternance les branches de conduite (10, 13 ; 11) de la conduite de liaison (7, 8, 10, 11, 13, 30),
**caractérisée en ce que**
f) le dispositif à valve de commutation (4) peut être actionné par voie électrique,
g) le modulateur de pression (5 ; 28) est agencé du moins partiellement dans la partie (7, 8 ; 30, 8), située en aval du dispositif à valve de commutation (4), de la conduite de liaison (7, 8, 10, 11, 13, 30),
h) le capteur de pression (20) est agencé au niveau de la branche de conduite (10, 13), associée au dispositif de freinage de secours (14), de la conduite de liaison (7, 8, 10, 11, 13, 30) en aval du dispositif de freinage de secours (14),
i) le dispositif de commande électrique (2 ; 23) est relié du côté sortie également au dispositif à valve de commutation (4) et est réalisé de manière à commander, lors de la réception d'un signal de pression du capteur de pression (20), le dispositif à valve de commutation (4) dans une position obturant la branche de conduite (10, 13), associée au dispositif de freinage de secours (14), de la conduite de liaison (7, 8, 10, 11, 13, 30).

2. Installation de freinage de remorque selon la revendication 1,
**caractérisée en ce que**
le dispositif de commande électrique (23) est relié du côté entrée également à une ligne électrique de freinage (21) susceptible d'être reliée au véhicule de traction et est réalisé de manière à commander, lors de la réception d'un signal d'actionnement via la ligne électrique de freinage (21), le dispositif à valve de commutation (4) dans la position obturant la branche de conduite (10, 13), associée au dispositif de freinage de secours (14), de la conduite de liaison (7, 8, 10, 11, 13, 30).

3. Installation de freinage de remorque selon la revendication 2, dans laquelle le capteur de pression (20) selon la revendication 1 est un premier capteur de pression,
**caractérisée en ce que**
le dispositif de commande électrique (23) est relié du côté entrée également à un deuxième capteur de pression (33) surveillant la pression de commande de freinage dans la conduite pneumatique de freinage (19) et à un troisième capteur de pression (31) surveillant la pression de l'accumulateur, et du côté sortie également à un dispositif d'avertissement, et est réalisé de telle sorte que
a) lors de la réception d'un signal de pression du premier capteur de pression (20), sans réception d'un signal de pression du deuxième capteur de pression (33) et sans réception d'un signal d'actionnement via la ligne électrique de freinage (21), il commande le modulateur de pression (28) dans une position obturant l'alimentation en pression vers le frein (6), avec activation simultanée du dispositif d'avertissement, et
b) lors de la réception supplémentaire d'un signal de pression, caractérisant une pression de sécurité prédéterminée, du troisième capteur de pression (31), il commande le modulateur de pression (28) dans une position ouvrant l'alimentation en pression vers le frein (6).
